# NEW EUROPEAN PATENT SPECIFICATION

(11) **EP 1 988 672 B2**
(45) Date of publication and mention of the opposition decision: **12.04.2017**
(45) Mention of the grant of the patent: 31.10.2012
(21) Application number: 07107197.1
(22) Date of filing: 30.04.2007
(51) Int. Cl.: H04L 12/66, H04L 12/28

(54) **Data mapping between two hierarchical data models**
Datenmapping zwischen zwei hierarchischen Datenmodellen
Cartographie de données entre deux modèles de données hiérarchiques

(43) Date of publication of application: 05.11.2008
(73) Proprietor: ABB RESEARCH LTD., 8050 Zürich (CH)
(72) Inventor: Kalland, Lars, N-1344, Haslum (NO); Braun, Roland, D-53859, Niederkassel (DE); Johansson, Henrik, S-72215, Västerås (SE); Johansson, Morgan, S-72338, Västerås (SE)
(74) Representative: Zimmermann & Partner Patentanwälte mbB

(56) References cited:
- EP-A- 1 772 785
- WO-A-03/042770
- US-A1- 2007 067 458

## Description

### TECHNICAL FIELD OF THE INVENTION

The present invention relates to enabling communication between devices provided in different communication environments. The invention more particularly relates to a method and computer program product for enabling a first device implementing a first hierarchical data model to exchange data with at least one second device according to a second hierarchical data model as well as to a process control device implementing a first hierarchical data model, which is to exchange data with at least one other device according to a second hierarchical data model.

### DESCRIPTION OF RELATED ART

Object based computerised systems are known to be used for controlling manufacturing and process industries, such as chemical plants, oil refineries, pulp and paper mills, steel mills, etc. They are also used in electrical power generation systems.

One general type of communication standard used is the PROFINET IO standard, which is widespread in many various types of control systems.

In the field of substation automation another standard has become more and more in demand and that is the standard IEC 61850. This standard is provided for substation equipment and enables communication between equipment from such substation equipment from different suppliers, and is therefore of interest to use by many electrical power supply companies. The standard also enables exchange of device descriptions and engineering data among different suppliers in a standardized way. This can be seen in document US-A1-2007/067458. However this standard is in essence limited to this area and cannot readily be used in other environments or in other control levels. This means that it may be hard to incorporate in a power control system that uses another standard.

The control equipment manufacturers would normally desire to provide equipment that can be used in as many different technical environments as possible and also for controlling a power generation system. This means that they would want to use the above mentioned PROFINET IO standard in order to cover a larger market while at the same time deliver equipment that can communicate according to the IEC 61850 standard.

In order to be able to this, there is therefore a need for a device implementing the hierarchical data model of the IEC 61850 standard to exchange data with other devices using the hierarchical data model of the PROFINET IO standard. This is not so simple to achieve because of the different ways that this communication is provided for and the different ways that data is modelled.

There is therefore a need for mapping of one data model on the other.

### SUMMARY OF THE INVENTION

The present invention is therefore directed towards mapping of a first data model on a second data model.

One object of the present invention is therefore to provide a method for enabling a first device implementing a first hierarchical data model to exchange data with at least one second device according to a second hierarchical data model.

This object is according to a first aspect of the present invention achieved through a method for enabling a first device implementing a first hierarchical data model to exchange data with at least one second device according to a second hierarchical data model,
where both the first and the second model have elements of different types at different levels and at least one element at one level in a set of device related elements and at least one data provision element at another level,
said method comprising the steps of:
mapping the data provision element of the first model to a data provision element of the second model, and
mapping one or more device identifying element in the set of device identifying elements in the first model to one or more device identifying element in the set of device identifying elements in the second model.

Another object of the present invention is to provide a process control device configured to operate according to a first hierarchical data model, which is to exchange data with at least one other device configured to operate according to a second hierarchical data model.

This object is according to a second aspect of the present invention achieved through a process control device implementing a first hierarchical data model, which is to exchange data with at least one other device according to a second hierarchical data model,
where both the first and the second model have elements on different types at different levels and at least one element at one level in a set of device related elements and at least one data provision element at another level, said device comprising:
an application handling unit handling various applications of the device in relation to controlling and communicating with other devices, and
a second model communication handling unit for providing communication with devices communicating according to the second model, and being arranged to:
   map the data provision element of the first model to a data provision element of the second model, and
   map one or more device identifying element in the set of device identifying elements in the first model to one or more device identifying element in the set of device
      identifying elements in the second model.

Another object of the present invention is to provide a computer program product for enabling a first device implementing a first hierarchical data model to exchange data with at least one second device according to a second hierarchical data model.

This object is according to a third aspect of the present invention achieved through a computer program product for enabling a first device implementing a first hierarchical data model to exchange data with at least one second device according to a second hierarchical data model,
where both the first and the second model have elements on different types at different levels and at least one element at one level in a set of device related elements and at least one data provision element at another level, comprising computer program code to make the first device, when said code is loaded into said first device,
map the data provision element of the first model to a data provision element of the second model, and map one or more device identifying element in the set of device identifying elements in the first model to a device identifying element in the set of device identifying elements in the second model.

The present invention has the advantage of allowing a device implementing a first model to communicate with another device using a second model. A device having such a capability can therefore be used in several different environments, which improves the flexibility of the device. Devices using the second model are in this way furthermore allowed to communicate with devices implementing the first model without having to be modified.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based system for process control comprising a number of different control levels and two different communication environments,
fig. 2 shows a block schematic of a data mapping between a first and a second hierarchical data model, and
fig. 3 schematically shows a computer program product in the form of a CD ROM disc comprising computer program code for carrying out a method of the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

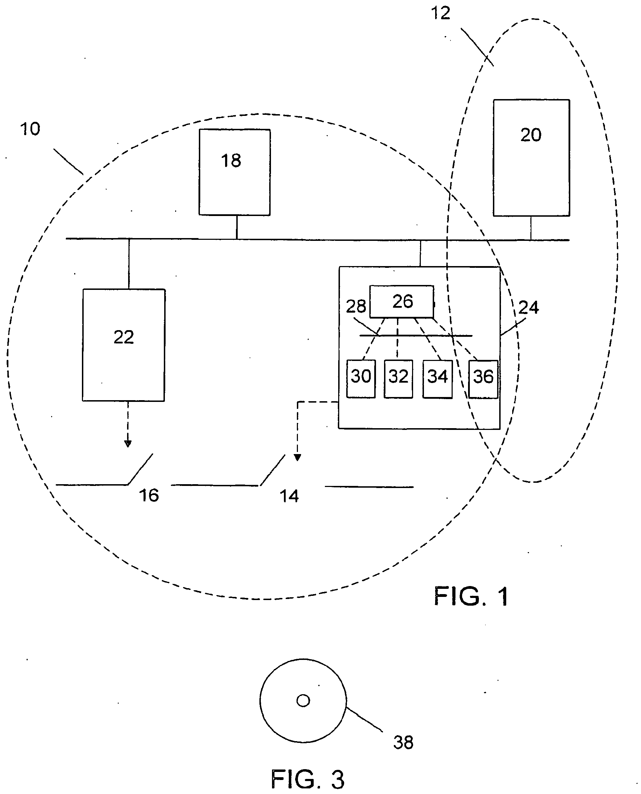

Fig. 1 schematically shows a system for process control. The system is typically an object based computerised system for controlling a process or perhaps part of a process. The main field of use of the present invention is in the field of an electrical power generation and supply process. The system may however be applicable also on other processes, such as water purification and distribution processes, oil and gas production and distribution processes, petrochemical, chemical, pharmaceutical and food processes, and pulp and paper production processes. These are just some examples of processes where the system can be applied. There exist countless other processes. The system in fig. 1 is divided into three levels a field device level, a local control level and a central control level. In the field device level there are here provided two field devices 14 and 16, which are here exemplified as two controlled relays that are used in controlling power supply. These relays are here controlled by two local process control devices 22 and 24 in the local control level. These local process control devices 22 and 24 are often called substation equipment. The local process control devices 22 and 24 are furthermore connected to two central control devices 18 and 20, which are typically provided as servers providing control applications using the local process control devices. These applications are typically provided through object-based application programs.

A first central control device 18, the local process control devices 22 and 24 and the field devices 14 and 16 are in this embodiment provided in a first environment 10, which according to the present invention may be an environment where communication is carried out according to the standard IEC 61850, while a second central control device 20 is provided in a second environment 12, which is an environment where communication is carried out according to a second standard, which standard may be PROFINET IO (PNIO). As can be seen a part of local process control device 24 is also provided in the second environment 12. The local process control devices 22 and 24 are in the first communication environment 10 also denoted IED (Intelligent Electronic Device). It should here be realised that the field devices may not be provided in the first environment, but provided in another environment.

In fig. 1 a first of these locals control devices 24 is shown in more detail. It is provided with an application handling unit 26, which handles various local control applications in relation to field devices 14 and 16 that are to be controlled. This can include sending control commands to such field devices as well as gathering data from these devices. The various applications of the local process control device 24 thus need to communicate with these field devices 14 and 16. It does of course also need to communicate with the first central control device 18 and with other local process control devices 22 in order to for instance agree on which local process control device is to control which field device. Here one function may be to use so-called "interlocking", where one device can reserve the right to operate field devices and depending on the setup it may be necessary restrict (interlock) other local process control devices from operating other or the same field device. In order to do this the local process control device 24 is provided with a number of communication handling units 30, 32, 34, 36, where some of these are first model communication handling units. In fig. 1 there is shown a first, second and third communication handling units 30, 32 and 34 for communicating according to the first model. The first communication handling unit 30 communicating according to the first model is provided for communication with the field devices 14 and 16. In IEC 61850 this communication handling unit 30 is also termed a SAV (Sampled Analog Values) communication handling unit. The second communication handling unit 32 communicating according to the first model is provided for communication with other local process control devices. In IEC 61850 this communication handling unit for communicating with other IEDs is termed a GOOSE (Generic Object Oriented Substation Event) communication handling unit. The third communication handling unit 34 communicating according to the first model is finally provided for communicating with devices on a higher level in the first environment 10, such the first central control device 18. Such a communication handling unit is in IEC 61850 often termed a MMS (Manufacturing Messaging Specification) communication handling unit. The application handling unit communicates with all the communication handling units 30, 32, 34 and 36 via an interface 28, often termed an ACSI (Abstract Communication Service Interface) in IEC 61850. All that has bee described so far is well known within the art and not really a part of the present invention.

According to the present invention there is however provided a second model communication handling unit 36, with which the application handling unit 26 communicates via the interface 28 in order to be able to send data to the second central control device 20 provided in the second environment 12. For this reason the second model communication handling unit 36 is shown as being included in the second environment 12.

The reason for providing two different environments is that in some fields of technology one specific standard has to be supported by control devices for some special reason. In the field of substation automation the IEC 61850 standard has to be supported by substation equipment because it is a major standard that allows combination of equipment from different suppliers. This standard thus enables the communication between equipment from different suppliers, and is therefore of interest to use by many electrical power supply companies. This standard is however in essence limited to this area and can not be readily be used in other environments and perhaps not on other levels in a control system.

The suppliers of such control equipment do often want to have control equipment that can be used for controlling many different type of processes.

Therefore, the control equipment manufacturers would normally desire to provide equipment that can be used in as many different technical environments as possible. When this is needed another standard is often more desirable. This standard is in many cases the standard PROFINET IO. This means that they would want to continue to use the above mentioned PROFINET IO standard in order to cover a larger market and to provide overall control of a power generation and supply process while at the same time deliver equipment that can communicate according to the IEC 61850 standard.

In order to be able to do this, there is therefore a need for providing a process control device that implements a hierarchical data model of the IEC 61850 standard and a PROFINET IO communication interface in order to be able to communicate with other devices using a hierarchical data model of the PROFINET IO standard. This is not so simple to achieve because of the different ways that this communication is provided and the different ways that data is organized in.

The present invention is directed towards solving this problem, which is done through the use of the second model communication handling unit 36, which performs a mapping of the data structure according to a first data model that is here IEC 61850 to a second data model that is here PROFINET IO (PNIO).

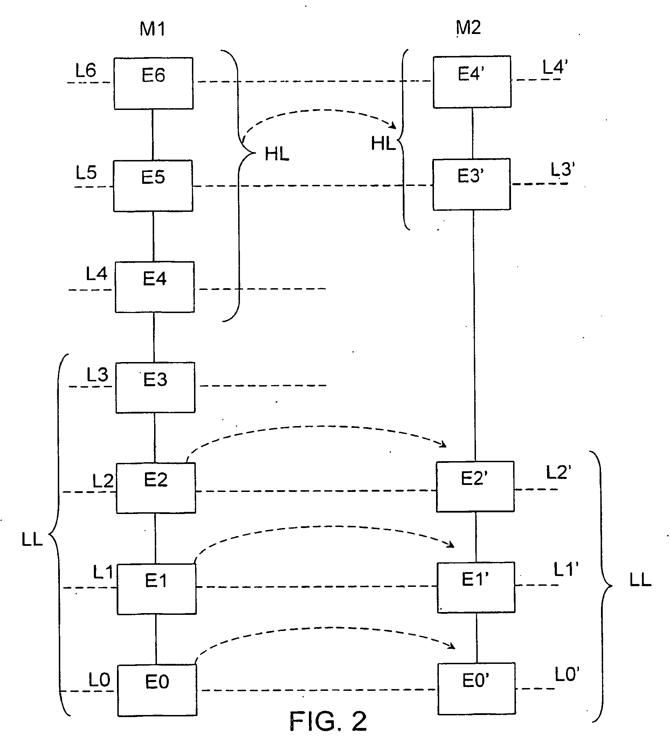

How the mapping is done will now be described in more detail with reference being made also to fig. 2, which schematically shows the two hierarchical data models M1 and M2 according to the different standards.

The IEC 61850 structure includes seven different elements. Where a first bottom element E0, which is a data provision element provided on a first lowest level L0 is denoted data attribute DA, a second higher element E1 provided on a second higher level L1 is termed data object DO, a third element E2 on a third higher level L2 is termed a logical node LN, a fourth element E3 on a fourth higher level L3 is termed a logical device LD, a fifth element E4 on a fifth higher level L4 is termed a server, a sixth element E5 on a sixth higher level L5 is termed Access Point and a seventh element E6 on a highest level L6 is termed an IED. The first, second, third and fourth elements E0, E1, E2 and E3 are here provided in a set of low level elements LL, while the fifth, sixth and seventh elements E4, E5 and E6 are a set of high level HL elements. The high level elements are device related elements because they are related to the device itself and its location. As an example they may include information like general information associated with the device, such as device number, communication address, vendor information, serial number etc. The seventh element E6 here corresponds to an identifier of a physical device, while the sixth element E5 is directed towards providing information about how logical functions in the device communicates with other entities in the first environment. It therefore corresponds to an indication of the type of connections that are provided for a logical device. In the set of low level elements LL, the fourth element E3, logical device, here corresponds to a collection of various functions in the device, the third element E2, logical node, corresponds to one specific function of this logical device, the second element E1 is a data object that corresponds to data associated with the function and the first element E0 corresponds to attributes of such data. A logical node is in IEC 61850 the smallest part of a function that exchanges data. It is an element defined by its data and method. It can be seen as an atomic sub-functional unit that can exchange data. The first and second elements E0 and E1 furthermore allow nested elements. This means that an element on one level may include one or more other elements on the same level. A data object may for instance include other data objects in addition to its data attributes.

The second model, which is the PNIO model, has a different structure. This structure only includes five elements. Here one type of first bottom element E0', which is also a data provision element, provided on a first lowest level L0' is termed channel, record data or diagnostic data, the second element E2' above this first element E1' provided on a second higher level L1' is termed subslot, the third element E2' provided on a third higher level L2' is termed slot, the fourth E3' provided on a fourth higher level L3' is termed API (access point identifier) while the fifth E4' element that is provided on a fifth highest level L4' is termed device instance. The fourth and fifth elements E3' and E4' here make up a set of high level elements HL while the first, second and third elements E0', E1' and E2' make up a set of low level LL elements. Also here the set of high level elements are device related elements that are associated with the location of a device. They may also here include other information like general information associated with the device, such as device number, communication address, vendor information, serial number etc. In this model the fifth element E4' identifies a logical device within a PROFINET IO device, the fourth element E3' identifies an interface of the logical device, while the second and third elements, E1' and E2' represent structural units of this interface where a process can be accessed. The first element E0' then represents data of the function provided via these structural units of the interface. There is thus no direct correspondence between the different levels. There are furthermore more levels in the first model M1 than in the second model M2, and the first model M1 may allow nested structures.

According to the present invention the second model communication handling unit 36 maps the logical representation of the first device 24 in the first model M1 to the second data model M2 in order to enable communication between the devices 24 and 20 in the two environments 10 and 12. As seen from the device 20 in the second environment 12, the device 24 here appears as a device in the second environment 12, as is indicated by the second model communication unit 36 being provided in this second environment. The second model communication handling unit 36 enables this communication through mapping the first level element E0 of the first model M1 on the first level element E0' of the second model M2, the second level element E1 of the first model M1 on the second level element E1' of the second model M2, the third level element E2 of the first model M1 on the third level element E2' of the second model M2. The low level elements of the first model that are being mapped are thus here mapped in ascending order to an element on a corresponding level in the second model starting from the lowest levels. The high level elements of the first model are also mapped on the high level elements of the second model. Here one or more of the high level elements of the first model is mapped to one or more of the high level elements of the second model. As an example, the sixth level element E5 of the first model M1 may be mapped on the fourth level element E3' of the second model M2 and the seventh level element E6 of the first model M1 may be mapped on the fifth level element E4' of the second model M2, while the fifth level element E4 may remain unmapped. In this way a logical node with a number of data objects and their attributes associated with a logical device provided in the first model M1 is mapped onto a number of logical connection points of the logical interface in the second model M2, while the access point of the first model M1 is mapped onto the logical interface (API) of the second model M2. As can be seen in fig. 2, all low level elements in the second model receive a mapping from elements in the first model. As can also be seen not all elements in the first model are being mapped.

In order to be able to preserve knowledge of the structure of the first data model, at least some of these unmapped elements should be accounted for in the mapping. This is generally done through including an identifier of an unmapped element in the mapping being performed for the closest lower element that is actually mapped. This is for instance done for the element E3 on the fourth level L4. In the embodiment described here the identifier is a name of the element. In order to be able to identity the correct logical device, the logical device name is combined with the name of a logical node in order to form a slot name.

A slot name will then have the following structure:
slot_name: logical_device_name. logical_node_name

It should here be realised that it is in the same way possible to include the name of the server in the mapping if this is desired. In this case the slot name would have the following structure:
slot_name: server_name. logical_device_name. logical_node_name

The name is just an identifier of the element of a level. It should here be realised that other types of identifiers may be provided than names. The important thing is that the non-mapped element is identified.

In the first data model M1 data objects on the second level L1 may be nested. This means that one data object may include other data objects. According to the present invention such nested data objects are not mapped. However they are accounted for in the same way as described above through including an identifier of the nested data object in the closest lower element being mapped, which is here a data attribute element.

For an exemplifying data object DO1 having data attributes DA1 and DA2 as well as a nested data object DO11 with data attributes DA3 and DA4, the data object DO1 is mapped according to:
subslot_name: data_object1_name,

The data attributes directly associated with data object DO1 are mapped according to:
channel_name1: data_attribute_name1
channel_name2: data_attribute_name2
while the nested data objected DO11 is mapped using its attributes through:
channel_name3: data_object11_name.data_attribute_name3
channel_name4: data_object11_name.data_attribute_name4

It is here also possible that a data attribute is nested in another data attribute. Here the nested data attribute is mapped on a channel, while name of the data attribute that includes the nested data attribute is considered in the mapping in the same way as was described above.

Data attributes furthermore have a functional constraint indicating for instance a status value or control parameters. According to the present invention, the second model communication handling unit keeps a table of these functional constraints and selects a PNIO service based on the constraint. Typical services may be cyclic data, acyclic data, alarm and diagnostics. The data provision element in the PNIO model may furthermore be various types of elements, such as a channel, record data or diagnosis data. It is here also possible that the type of element to which the data attribute is being mapped is also determined based on the functional constraint.

A first logical node in the first model M1, often named node LLNO, also has a special meaning in that it specifies characteristics of the device itself. It includes a configuration of a data set which groups data objects and/or data attributes from the normal logical nodes (comprising normal control functionality for various entities in the system). There is also another dedicated logical node LPHD in the first model M1, which is used to represent the physical device itself. Each node is mapped to a dedicated slot and one or more associated subslots. Normally this mapping is done through a mapping of LLNO to a dedicated slot subslot combination, which combination corresponds to a PNIO Device Access Point (DAP). As an alternative it may be mapped to more subslots of the dedicated slot. The LPHD node may also be mapped to a slot subslot combination. Also this LPHD node may be mapped to more subslots of the dedicated slot. Which slots to actually use is usually determined by the vendor of the specific equipment.

When data is being sent to and received from the central control device 20 of the second environment 12 it is sent and received according to the second model M2. When the second model communication handling unit 36 receives a packet including such data, it thus identifies the channel field as a data attribute, the subslot field as a data object, the API field as an access point and furthermore extracts the logical device name from the slot name for provision in the logical device element. In this way data or commands for a certain function in a group of functions can easily be provided for the application handling unit 26 of the local process control device 24.

In the opposite direction the application handling unit 26 of the local process control device 24 believes that it is communicating with another local process device in the first environment 10. However, the second model communication control unit 36 here in essence restructures the data to fit the format of the second environment 12 via mapping between the two data models M1 and M2.

In this way the present invention enables devices implementing the first standard to communicate according to a second standard and thus enhanced and more flexible communication ability is provided to local process control devices. This is furthermore done in an efficient manner. Devices provided in the second environment are in this way furthermore allowed to communicate with devices in the first environment without having to be modified.

The local process control device according to the present invention may be implemented through one or more processors together with computer program code for performing its functions. The program code mentioned above may also be provided as a computer program product, for instance in the form of one or more data carriers carrying computer program code for performing the functionality of the present invention when being loaded into the local process control device. One such carrier 38, in the form of a CD ROM disc is generally outlined in fig. 3. It is however feasible with other data carriers, like diskettes, memory sticks or USB memories. The computer program code can furthermore be provided as pure program code on an external server and fetched from there for provision in the device that is to receive it.

While the invention has been described in connection with what is presently considered to be most practical and preferred embodiments, it is to be understood that the invention is not to be limited to the disclosed embodiments, but on the contrary, is intended to cover various modifications and equivalent arrangements. The invention is for instance not limited to the described models and standards, but may be applied for mapping of any model to another used for communication. Therefore the number of elements mapped may differ from what has been described above. The process control device according to the present invention may not be provided in the first environment, but only in the second environment. In this case it does not have to include any first model communication handling units. Therefore the present invention is only to be limited by the following claims.

## Claims

1. Method for enabling a process control device (24) implementing a first hierarchical data model (M1) to exchange data with at least one other device (20) according to a second hierarchical data model (M2),
where both the first and the second model (M1, M2) have elements (E0, E1, E2, E3, E4, E5, E6, E0', E1', E2', E3', E4') of different types at different levels (L0, L1, L2, L3, L4, L5, L6, L0', L1', L2', L3', L4') and at least one element (E6, E5, E4, E4', E3') at one level (L6, L5, L4; L4', L3') in a set of device related elements (HL) and at least one data provision element (E0, E0') at another level (L0, L0'),
said method performed in said process control device (24) comprising the steps of:
mapping said data provision element (E0) of the first model (M1) to a data provision element (E0') of the second model (M2), and
mapping one or more device identifying element (E6, E5) in the set of device identifying elements (HL) in the first model (M1) to one or more device identifying element (E4', E3') in the set of device identifying elements (HL) in the second model (M2), **characterized in that** the first model (M1) includes more elements than the second model (M2) and at least one (E3, E4) is not mapped to the second model, and
including an identifier of at least one unmapped element (E3; E1) provided on a level (L3; L1) in the first model (M1) in the closest lower element (E2; E0) being mapped, and
comprising a list of functional constraints for a data provision element of the first model and controlling the step of mapping this element in dependence of the functional constraints.

2. Method according to claim 1, wherein each level (L0', L1', L2', L3', L4') of the second model (M2) receives a mapping of an element (E0, E1, E2, E5, E6) from the first model (M1).

3. Method according to claim 1, where a mapped element (E1) of one type on one level (L1) in the first model (M1) may include other elements of the same type, wherein the step of including an identifier is performed for said other elements in the closest lower element (E0) being mapped, while keeping these other elements unmapped.

4. Method according to any of claims 1-3, wherein all elements (E3) of at least one level (L3) in the first model are unmapped and the step of including an identifier is performed for these elements in the closest lower element (E2) being mapped.

5. Method according to any of claims 1 - 4, wherein the identifier is a name and the closest lower element being mapped has a name, and further comprising the step of combining these names and naming the element to which said closest lower element is being mapped with this combination.

6. Method according to any of claims 1 - 5, wherein a first element on the lowest level of the first model includes a second element on the same level, where the second element is mapped on an element in the lowest level of the second model, the first element is unmapped and further comprising the step of including an identifier of the first element in the mapping of the second element.

7. Method according to any previous claim, wherein the step of controlling comprises setting a service for the corresponding object in the second model.

8. Method according to any previous claim, wherein there are data provision elements of different types in the second model and further comprising the step of selecting a type of data provision element in the second model that the data provision element in the first model is to be mapped to based on the functional constraint.

9. Method according to any previous claim, wherein the data provision and structural elements are provided in a set of low level elements (LL) where a low level element (E0 E1 E2) of the first model (M1 is mapped to a low level element (E0, E1, E2') of the second model (M2).

10. Method according to claim 9, wherein the data provision elements are provided in the lowest levels (L0 L1, L2) of the models and all elements (E0, E1, E2) in the set of low level elements (LL) of the first model (M1) that are mapped are mapped in ascending order to an element (E0', E1', E2') on a corresponding level (L0', L1', L2') in the second model (M2).

11. Method according to claim 9 or 10, wherein the set of high level (HL) elements of the first model (M1) includes an element (E5) directed towards providing information about how logical functions in a device communicate with other entities in the first environment (10) and the set of low level elements (E0, E1, E2) of the first model (M1) are directed towards identifying a collection of functions, identifying functions, data for these functions and attributes of said data, while the set of high level (HL) elements of the second model (M2) includes an element (E3') providing a logical interface and the set of low level elements (E0', E1', E2') of the second model (M2) include structural units (E1', E2') of the interface and data (E0').

12. Method according to claim 11, wherein the low level elements of the first model (M1) are directed towards providing logical devices, logical nodes of such logical devices, data objects of such logical nodes and data attributes of such data objects, while the low level elements of the second model are directed towards providing slots, subslots within such slots and channels, record data or diagnosis data of such subslots.

13. Method according to claim 11 or 12, wherein generic device specific administrative functionality provided on a logical node in the first model is mapped to a dedicated slot and one or more associated subslots for acting as a device access point in the second model.

14. Method according to any of claims 11 - 13, wherein the first model is the IEC 61850 model and the second model is a PROFINET 10 model.

15. Method according to any previous claim, further comprising the step of sending data to and/or receiving data from a second device using the mapping of the first model to the second model.

16. Process control device (24) implementing a first hierarchical data model (M1), which is to exchange data with at least one other device (20) according to a second hierarchical data model,
where both the first and the second model (M1, M2) have elements (E0, E1, E2, E3, E4, E5, E6, E0', E1', E2', E3', E4') on different types at different levels (L0, L1, L2, L3, L4, L5, L6, L0', L1', L2', L3', L4') and at least one element (E6, E5, E4, E4', E3') at one level (L6, L5, L4; L4', L3') in a set of device related elements (HL) and at least one data provision element (E0, E0') at another level (L0, L0'),
said device (24) comprising:
an application handling unit (26) handling various applications of the device (24) in relation to controlling and communicating with other devices (14, 16, 18, 20, 22), and a second model communication handling unit (36) for providing communication with devices (20) communicating according to the second model, and being arranged to:
map said data provision element (E0) of the first model (M1) to a data provision element (E0') of the second model (M2), and
map one or more device identifying element (E6, E5) in the set of device identifying elements (HL) in the first model (MI) to one or more device identifying element (E4', E3') in the set of device identifying elements (HL) in the second model (M2), **characterized in that** the first model (M1) includes more elements than the second model (M2) and at least one (E3, E4) is not mapped to the second model, and wherein
the second model communication handling unit (36) is further arranged to include an identifier of at least one unmapped element (E3; EI) provided on a level (L3; L1) in the first model (MI) in the closest lower element (E2; E0) being mapped, and
the second model communication handling unit (36) has a list of functional constraints for a data provision element of the first model and is further arranged to control the mapping of this element in dependence of the functional constraints.

17. Process control device according to claim 16, wherein each level (L0', L1', L2', L3', L4') of the second model (M2) receives a mapping of an element (E0, E1, E2, E5, E6) from the first model (MI).

18. Process control device according to claim 16 or 17, wherein the second model communication handling unit (36) is further arranged to include an identifier of at least one unmapped element (E3; EI) provided on a level (L3; L1) in the first model (MI) in the closest lower element (E2; E0) being mapped.

19. Process control device according to claim 18, where an element (E1) of one type on one level (L1) in the first model (M1) that is being mapped may include other elements of the same type and the second model communication handling unit (36) is arranged to include an identifier for these other elements in the closest lower element (E0) being mapped, while keeping these other elements unmapped.

20. Process control device according to claim 18 or 19, wherein all elements (E3) of at least one level (L3) in the first model are unmapped and the second model communication handling unit (36) is arranged to include an identifier for these elements (E3) in the closest lower element (E2) being mapped.

21. Process control device according to any of claims 18 - 20, wherein the identifier is a name and the closest lower element being mapped has a name and the second model communication handling unit (36) is arranged to combine these names and name the element to which said closest lower element is being mapped with this combination.

22. Process control device according to any of claims 18 - 21, wherein a first element on the lowest level of the first model includes a second element on the same level, and the second model communication handling unit (36) is arranged to map the second element on an element in the second model, keep the first element unmapped and include an identifier of the first element in the mapping of the second element.

23. Process control device according to any of claims 16 - 22, wherein the second model communication handling unit (36) when controlling the mapping of a data provision element is arranged to set a service for the corresponding object in the second model.

24. Process control device according to claim 22 or 23, where there are data provision elements of different types in the second model and the second model communication handling unit (36) when controlling the mapping of a data provision element is arranged to select a type of data provision element in the second model that the data provision element in the first model is to be mapped to based on the functional constraint.

25. Process control device according to any of claims 16 - 24, further comprising at least one first model communication handling unit (30, 32, 34) for providing communication with other devices (14, 16, 18, 22) using the first model.

26. Process control device according to any of claims 16 - 25, wherein the first model is the IEC 61850 model and the second model is a PROFINET 10 model.

27. Computer program product (38) for enabling a process control device (24) implementing a first hierarchical data model (M1) to exchange data with at least one other device (20) according to a second hierarchical data model (M2),
where both the first and the second model (M1, M2) have elements (E0, E1, E2, E3, E4, E5, E6, E0', E1', E2', E3', E4') on different types at different levels (L0, L1, L2, L3, L4, L5, L6, L0', L1', L2', L3', L4') and at least one element (E6, E5, E4, E4', E3') at one level (L6, L5, L4; L4', L3') in a set of device related elements (HL) and at least one data provision element (E0, E0') at another level (L0, L0'),
comprising computer program code to make the first device (24), when said code is loaded into said process control device (24),
map said data provision element (E0) of the first model (M1) to a data provision element (E0') of the second model (M2), and
map one or more device identifying elements (E6, E5) in the set of device identifying elements (HL) in the first model (M1) to one or more device identifying elements (E4', E3') in the set of device identifying elements (HL) in the second model (M2), **characterized in that** the first model (M1) includes more elements than the second model (M2) and at least one (E3, E4) is not mapped to the second model, and
including an identifier of at least one unmapped element (E3; E1) provided on a level (L3; L1) in the first model (M1) in the closest lower element (E2; E0) being mapped, and
comprising a list of functional constraints for a data provision element of the first model and controlling the step of mapping this element in dependence of the functional constraints.

## Patentansprüche

1. Verfahren zum Freigeben einer Prozesssteuerungsvorrichtung (24), die ein erstes hierarchisches Datenmodell (M1) implementiert, für den Austausch von Daten mit mindestens einer anderen Vorrichtung (20) gemäß einem zweiten hierarchischen Datenmodell (M2),
wobei sowohl das erste als auch das zweite Modell (M1, M2) Elemente (E0, E1, E2, E3, E4, E5, E6, E0', E1', E2', E3', E4') verschiedener Arten auf verschiedenen Ebenen (L0, L1, L2, L3, L4, L5, L6, L0', L1', L2', L3', L4') und mindestens ein Element (E6, E5, E4, E4', E3') auf einer Ebene (L6, L5, L4, L4', L3') in einem Satz von vorrichtungsbezogenen Elementen (HL) und mindestens ein Datenbereitstellungselement (E0, E0') auf einer anderen Ebene (L0, L0') haben,
wobei das Verfahren, das in der Prozesssteuerungsvorrichtung (24) ausgeführt wird, folgende Schritte umfasst:
Mapping des Datenbereitstellungselements (E0) des ersten Modells (M1) auf ein Datenbereitstellungselement (E0') des zweiten Modells (M2), und
Mapping eines oder mehrerer Vorrichtungsidentifizierungselemente(s) (E6, E5) in dem Satz von Vorrichtungsidentifizierungselementen (HL) in dem ersten Modell (M1) auf ein oder mehrere Vorrichtungsidentifizierungselement(e) (E4', E3') in dem Satz von Vorrichtungsidentifizierungselementen (HL) in dem zweitem Modell (M2), **dadurch gekennzeichnet, dass** das erste Modell (M1) mehr Elemente enthält als das zweite Modell (M2) und
mindestens eines (E3, E4) nicht auf das zweite Modell gemappt ist, und
Aufnehmen eines Identifikators mindestens eines ungemappten Elements (E3; E1), das auf einer Ebene (L3; L1) in dem ersten Modell (M1) bereitgestellt ist, in dem nächst tieferen Element (E2; E0), das gemappt wird, und
Umfassen einer Liste funktioneller Einschränkungen für ein Datenbereitstellungselement des ersten Modells und Kontrollieren des Schrittes des Mappings dieses Elements abhängig von den funktionellen Einschränkungen.

2. Verfahren nach Anspruch 1, wobei jede Ebene (L0', L1', L2', L3', L4') des zweiten Modells (M2) ein Mapping eines Elements (E0, E1, E2, E5, E6) vom ersten Modell (M1) empfängt.

3. Verfahren nach Anspruch 1, wobei ein gemapptes Element (E1) einer Art auf einer Ebene (L1) in dem ersten Modell (M1) andere Elemente derselben Art enthalten kann, wobei der Schritt der Aufnahme eines Identifikators für die anderen Elemente in dem nächst tieferen Element (E0), das gemappt wird, ausgeführt wird, während diese anderen Elemente ungemappt bleiben.

4. Verfahren nach einem der Ansprüche 1 bis 3, wobei alle Elemente (E3) von mindestens einer Ebene (L3) in dem ersten Modell (M1) ungemappt sind und der Schritt der Aufnahme eines Identifikators für diese Elemente in dem nächst tieferen Element (E2), das gemappt wird, ausgeführt wird.

5. Verfahren nach einem der Ansprüche 1 bis 4, wobei der Identifikator ein Name ist und das nächst tiefere gemappte Element einen Namen hat und des Weiteren umfassend den Schritt des Kombinierens dieser Namen und des Benennens des Elements, auf das das nächst tiefere Element gemappt wird, mit dieser Kombination.

6. Verfahren nach einem der Ansprüche 1 bis 5, wobei ein erstes Element auf der tiefsten Ebene des ersten Modells ein zweites Modell auf derselben Ebene enthält, wobei das zweite Element auf einem Element in der tiefsten Ebene des zweiten Modells gemappt wird, das erste Element ungemappt ist, umfassend den Schritt der Aufnahme eines Identifikators des ersten Elements in dem Mapping des zweiten Elements.

7. Verfahren nach einem der vorangehenden Ansprüche, wobei der Schritt zum Kontrollieren das Einstellen eines Dienstes für das entsprechend Objekt in dem zweiten Modell umfasst.

8. Verfahren nach einem der vorangehenden Ansprüche, wobei Datenbereitstellungselemente verschiedener Arten im zweiten Modell vorgesehen sind und des Weiteren umfassend den Schritt des Auswählens einer Art von Datenbereitstellungselement im zweiten Modell, auf das das Datenbereitstellungselement im ersten Modell gemappt werden soll, auf der Basis der funktionellen Einschränkung.

9. Verfahren nach einem der vorangehenden Ansprüche, wobei die Datenbereitstellungs- und Strukturelemente in einem Satz von Elementen (LL) auf tiefer Ebene bereitgestellt sind, wobei ein Element (E0, E1, E2) tiefer Ebene des ersten Modells (M1) auf ein Element (E0, E1, E2') tiefer Ebene des zweiten Modells (M2) gemappt wird.

10. Verfahren nach Anspruch 9, wobei die Datenbereitstellungselemente in den tiefsten Ebenen (L0, L1, L2) der Modelle bereitgestellt sind und alle Elemente (E0, E1, E2) in dem Satz von Elementen (LL) auf tiefer Ebene des ersten Modells (M1), die gemappt werden, in aufsteigender Reihenfolge auf ein Element (E0', E1', E2') auf einer entsprechenden Ebene (L0', L1', L2') in dem zweiten Modell (M2) gemappt werden.

11. Verfahren nach Anspruch 9 oder 10, wobei der Satz von Elementen (HL) auf hoher Ebene des ersten Modells (M1) ein Element (E5) enthält, das auf die Bereitstellung von Informationen ausgerichtet ist, wie logische Funktionen in einer Vorrichtung mit anderen Einheiten in der ersten Umgebung (10) kommunizieren, und der Satz von Elementen (LL) auf tiefer Ebene (E0, E1, E2) des ersten Modells (M1) auf die Identifizierung einer Sammlung von Funktionen, Identifizierungsfunktionen, Daten für diese Funktionen und Attribute der Daten ausgerichtet ist, während der Satz von Elementen (HL) auf hoher Ebene des zweiten Elements (M2) ein Element (E3') enthält, das eine logische Schnittstelle bereitstellt und der Satz von Elementen (LL) auf tiefer Ebene (E0', E1', E2') des zweiten Modells (M2) Struktureinheiten (E1', E2') der Schnittstelle und Daten (E0') enthält.

12. Verfahren nach Anspruch 11, wobei die Elemente tiefer Ebene des ersten Modells (M1) auf die Bereitstellung logischer Vorrichtungen, logischer Knoten solcher logischer Vorrichtungen, Datenobjekte solcher logischer Knoten und Datenattribute solcher Datenobjekte ausgerichtet sind, während die Elemente tiefer Ebene des zweiten Modells auf die Bereitstellung von Schlitzen, Subschlitzen innerhalb solcher Schlitze und Kanäle, Aufzeichnungsdaten oder Diagnosedaten solcher Subschlitze ausgerichtet sind.

13. Verfahren nach Anspruch 11 oder 12, wobei eine generische vorrichtungsspezifische administrative Funktionalität, die auf einem logischen Knoten in dem ersten Modell bereitgestellt ist, auf einen zweckbestimmten Schlitz und einen oder mehrere zugehörige(n) Subschlitz(e) gemappt wird, um als Vorrichtungszugangspunkt im zweiten Modell zu dienen.

14. Verfahren nach einem der Ansprüche 11 bis 13, wobei das erste Modell das IEC 61850 Modell ist und das zweite Modell ein PROFINET 10 Modell ist.

15. Verfahren nach einem der vorangehenden Ansprüche, des Weiteren umfassend den Schritt des Sendens von Daten zu und/oder des Empfangens von Daten von einer zweiten Vorrichtung unter Verwendung des Mappings des ersten Modells auf das zweite Modell.

16. Prozesssteuerungsvorrichtung (24), die ein erstes hierarchisches Datenmodell (M1) implementiert, das Daten mit mindestens einer anderen Vorrichtung (20), die einem zweiten hierarchischen Datenmodell entspricht, austauschen soll,
wobei sowohl das erste als auch das zweite Modell (M1, M2) Elemente (E0, E1, E2, E3, E4, E5, E6, E0', E1', E2', E3', E4') verschiedener Arten auf verschiedenen Ebenen (L0, L1, L2, L3, L4, L5, L6, L0', L1', L2', L3', L4') und mindestens ein Element (E6, E5, E4, E4', E3') auf einer Ebene (L6, L5, L4, L4', L3') in einem Satz von vorrichtungsbezogenen Elementen (HL) und mindestens ein Datenbereitstellungselement (E0, E0') auf einer anderen Ebene (L0, L0') haben,
wobei die Vorrichtung (24) umfasst:
eine Anwendungshandhabungseinheit (26), die verschiedene Anwendungen der Vorrichtung (24) in Bezug auf die Steuerung und Kommunikation mit anderen Vorrichtungen (14, 16, 18, 20, 22) handhabt, und eine Kommunikationshandhabungseinheit (36) für das zweite Modell zum Bereitstellen einer Kommunikation mit Vorrichtungen (20), die gemäß dem zweiten Modell kommunizieren, und ausgebildet ist für:
Mapping des Datenbereitstellungselements (E0) des ersten Modells (M1) auf ein Datenbereitstellungselement (E0') des zweiten Modells (M2) und
Mapping eines oder mehrerer Vorrichtungsidentifizierungselemente(s) (E6, E5) in dem Satz von Vorrichtungsidentifizierungselementen (HL) in dem ersten Modell (M1) auf ein oder mehrere Vorrichtungsidentifizierungselement(e) (E4', E3') in dem Satz von Vorrichtungsidentifizierungselementen (HL) in dem zweiten Modell (M2), **dadurch gekennzeichnet, dass** das erste Modell (M1) mehr Elemente als das zweite Modell (M2) enthält und mindestens eines (E3, E4) nicht auf das zweite Modell gemappt wird, und wobei
die Kommunikationshandhabungseinheit (36) für das zweite Modell ferner ausgebildet ist, einen Identifikator mindestens eines ungemappten Elementes (E3; E1), das auf einer Ebene (L3; L1) in dem ersten Modell (M1) bereitgestellt ist, in dem nächst tieferen Element (E2, E0), das gemappt wird, aufzunehmen, und wobei
die Kommunikationshandhabungseinheit (36) für das zweite Modell eine Liste funktioneller Einschränkungen für ein Datenbereitstellungselement des ersten Modells umfasst und ferner zum Kontrollieren des Mappings dieses Elements abhängig von den funktionellen Einschränkungen ausgebildet ist.

17. Prozesssteuerungsvorrichtung nach Anspruch 16, wobei jede Ebene (L0', L1', L2', L3', L4') des zweiten Modells (M2) ein Mapping eines Elements (E0, E1, E2, E5, E6) vom ersten Modell (M1) empfängt.

18. Prozesssteuerungsvorrichtung nach Anspruch 16 oder 17, wobei die Kommunikationshandhabungseinheit (36) für das zweite Modell ferner ausgebildet ist, einen Identifikator mindestens eines ungemappten Elementes (E3; E1), das auf einer Ebene (L3; L1) in dem ersten Modell (M1) bereitgestellt ist, in dem nächst tieferen Element (E2, E0), das gemappt wird, aufzunehmen.

19. Prozesssteuerungsvorrichtung nach Anspruch 18, wobei ein Element (E1) einer Art auf einer Ebene (L1) in dem ersten Modell (M1), das gemappt wird, andere Elemente derselben Art enthalten kann und die Kommunikationshandhabungseinheit (36) für das zweite Modell ferner ausgebildet ist, einen Identifikator für diese anderen Elemente in dem nächst tieferen Element (E0), das gemappt wird, aufzunehmen, während diese anderen Elemente ungemappt bleiben.

20. Prozesssteuerungsvorrichtung nach Anspruch 18 oder 19, wobei alle Elemente (E3) mindestens einer Ebene (L3) in dem ersten Modell ungemappt sind und die Kommunikationshandhabungseinheit (36) für das zweite Modell ausgebildet ist, einen Identifikator für diese Elemente (E3) in dem nächst tieferen Element (E2), das gemappt wird, aufzunehmen.

21. Prozesssteuerungsvorrichtung nach einem der Ansprüche 18 bis 20, wobei der Identifikator ein Name ist und das nächst tiefere Element, das gemappt wird, einen Namen hat und die Kommunikationshandhabungseinheit (36) für das zweite Modell ausgebildet ist, diese Namen zu kombinieren und das Element, auf das das nächst tiefere Element gemappt wird, mit dieser Kombination zu benennen.

22. Prozesssteuerungsvorrichtung nach einem der Ansprüche 18 bis 21, wobei eine erstes Element der tiefste Ebene des ersten Modells ein zweites Element auf derselben Ebene enthält und die Kommunikationshandhabungseinheit (36) für das zweite Modell ausgebildet ist, das zweite Element auf ein Element in dem zweiten Modell zu mappen, das erste Element ungemappt zu halten und einen Identifikator des ersten Elements in dem Mapping des zweiten Elements aufzunehmen.

23. Prozesssteuerungsvorrichtung nach einem der Ansprüche 16 bis 22, wobei die Kommunikationshandhabungseinheit (36) für das zweite Modell beim Kontrollieren des Mappings eines Datenbereitstellungselements zum Einstellen eines Dienstes für das entsprechende Objekt in dem zweiten Modell ausgebildet ist.

24. Prozesssteuerungsvorrichtung nach Anspruch 22 oder 23, wobei Datenbereitstellungselemente verschiedener Arten im zweiten Modell vorhanden sind und die Kommunikationshandhabungseinheit (36) für das zweite Modell beim Kontrollieren des Mappings eines Datenbereitstellungselements zum Auswählen einer Art von Datenbereitstellungselement im zweiten Modell, auf das das Datenbereitstellungselement im ersten Modell gemappt werden soll, auf der Basis der funktionellen Einschränkung ausgebildet ist.

25. Prozesssteuerungsvorrichtung nach einem der Ansprüche 16 bis 24, des Weiteren umfassend mindestens eine Kommunikationshandhabungseinheit (30, 32 34) für das erste Modell, zur Bereitstellung einer Kommunikation mit anderen Vorrichtungen (14, 16, 18, 22) unter Verwendung des ersten Modells.

26. Prozesssteuerungsvorrichtung nach einem der Ansprüche 16 bis 25, wobei das erste Modell das IEC 61850 Modell ist und das zweite Modell ein PROFINET 10 Modell ist.

27. Computerprogrammprodukt (38) zum Freigeben einer Prozesssteuerungsvorrichtung (24), die ein erstes hierarchisches Datenmodell (M1) implementiert, für den Austausch von Daten mit mindestens einer anderen Vorrichtung (20) gemäß einem zweiten hierarchischen Datenmodell (M2),
wobei sowohl das erste wie auch das zweite Modell (M1, M2) Elemente (E0, E1, E2, E3, E4, E5, E6, E0', E1', E2', E3', E4') verschiedener Arten auf verschiedenen Ebenen (L0, L1, L2, L3, L4, L5, L6, L0', L1', L2', L3', L4') und mindestens ein Element (E6, E5, E4, E4', E3') auf einer Ebene (L6, L5, L4, L4', L3') in einem
Satz von vorrichtungsbezogenen Elementen (HL) und mindestens ein Datenbereitstellungselement (E0, E0') auf einer anderen Ebene (L0, L0') haben,
umfassend einen Computerprogrammcode zur Bildung der ersten Vorrichtung (24), wenn der Code in die Prozesssteuerungsvorrichtung (24) geladen wird,
Mapping des Datenbereitstellungselements (E0) des ersten Modells (M1) auf ein Datenbereitstellungselement (E0') des zweiten Modells (M2) und
Mapping eines oder mehrerer Vorrichtungsidentifizierungselemente(s) (E6, E5) in dem Satz von Vorrichtungsidentifizierungselementen (HL) in dem ersten Modell (M1) auf ein oder mehrere Vorrichtungsidentifizierungselement(e) (E4', E3') in dem Satz von Vorrichtungsidentifizierungselementen (HL) in dem zweitem Modell (M2), **dadurch gekennzeichnet, dass** das erste Modell (M1) mehr Elemente enthält als das zweite Modell (M2) und mindestens eines (E3, E4) nicht auf das zweite Modell gemappt ist, und
Aufnehmen eines Identifikators mindestens eines ungemappten Elements (E3; E1), das auf einer Ebene (L3; L1) in dem ersten Modell (M1) bereitgestellt ist, in dem nächst tieferen Element (E2; E0), das gemappt ist, und
Umfassen einer Liste funktioneller Einschränkungen für ein Datenbereitstellungselement des ersten Modells und Kontrollieren des Schrittes des Mappings dieses Elements abhängig von den funktionellen Einschränkungen.

## Revendications

1. Procédé pour permettre à un dispositif (24) de contrôle de processus, mettant en oeuvre un premier modèle (M1) hiérarchique de données d'échanger des données avec au moins un autre dispositif (20) suivant un deuxième modèle (M2) hiérarchique de données,
dans lequel à la fois le premier et le deuxième modèles (M1, M2) ont des éléments (E0, E1, E2, E3, E4, E5, E6, E0', E1', E2', E3', E4') de types différents à des niveaux (L0, L1, L2, L3, L4, L5, L6, L0', L1', L2', L3', L4') différents et au moins un élément (E6, E5, E4, E4', E3') à un niveau (L6, L5, L4 ; L4', L3') dans un jeu d'éléments (HL) se rapportant à un dispositif et au moins un élément (E0, E0') de fourniture de données à un autre niveau (L0, L0'),
le procédé effectué dans ledit dispositif (24) de commande de processus comprenant les étapes suivants:
mapper ledit élément (E0) de fourniture de données du premier modèle (M1) à un élément (E0') de fourniture de données du deuxième modèle (M2), et
mapper un ou plusieurs éléments (E6, E5) d'identification de dispositif dans le jeu d'éléments (HL) d'identification de dispositif dans le premier modèle (M1) à un ou plusieurs éléments (E4', E3') d'identification de dispositif dans le jeu d'éléments (HL) d'identification de dispositif dans le deuxième modèle (M2), **caractérisé en ce que** le premier modèle (M1) inclut plus d'éléments que le deuxième modèle (M2) et au moins un (E3, E4) n'est pas mappé au deuxième modèle, et
inclure un identifiant d'au moins un élément (E3 ; E1) non mappé disposé à un niveau (L3 ; L1) dans le premier modèle (M1), dans l'élément (E2 ; E0) mappé inférieur le plus proche, et
comprendre une liste de contraintes fonctionnelles pour un élément de fourniture de données du premier modèle et commander l'étape de mapper cet élément en fonction des contraintes fonctionnelles.

2. Procédé selon la revendication 1, dans lequel chaque niveau (L0', L1', L2', L3', L4') du deuxième modèle (M2) reçoit un mappage d'un élément (E0, E1, E2, E5, E6) depuis le premier modèle (M1).

3. Procédé selon la revendication 1, dans lequel un élément (E1) mappé d'un type à un niveau (L1) dans le premier modèle (M1) peut inclure d'autres éléments du même type, sachant que l'étape consistant à inclure un identifiant est effectuée pour lesdits autres éléments dans l'élément (E0) mappé inférieur le plus proche, tout en maintenant ces autres éléments non mappés.

4. Procédé selon l'une quelconque des revendications 1 à 3, dans lequel tous les éléments (E3) d'au moins un niveau (L3) dans le premier modèle sont non mappés et l'étape consistant à inclure un identifiant est effectuée pour ces éléments dans l'élément (E2) mappé inférieur le plus proche.

5. Procédé selon l'une quelconque des revendications 1 à 4, dans lequel l'identifiant est un nom et l'élément mappé inférieur le plus proche a un nom, et comprenant en outre l'étape consistant à combiner ces noms et nommer l'élément auquel ledit élément inférieur le plus proche est en train d'être mappé avec cette combinaison.

6. Procédé selon l'une quelconque des revendications 1 à 5, dans lequel un premier élément au niveau le plus bas du premier modèle inclut un deuxième élément au même niveau, sachant que le deuxième élément est mappé sur un élément dans le niveau le plus bas du deuxième modèle, le premier élément est non mappé et comprenant en outre l'étape consistant à inclure un identifiant du premier élément dans le mappage du deuxième élément.

7. Procédé selon une quelconque revendication précédente, dans lequel l'étape de commande comprend le fait d'établir un service pour l'objet correspondant dans le deuxième modèle.

8. Procédé selon une quelconque revendication précédente, dans lequel il existe des éléments de fourniture de données de différents types dans le deuxième modèle et comprenant en outre l'étape consistant à sélectionner un type d'élément de fourniture de données dans le deuxième modèle auquel l'élément de fourniture de données dans le premier modèle doit être mappé sur la base de la contrainte fonctionnelle.

9. Procédé selon une quelconque revendication précédente, dans lequel les éléments de fourniture de données et structurels sont prévus dans un jeu d'éléments (LL) de bas niveau où un élément (E0, E1, E2) du premier modèle (M1) est mappé à un élément (E0, E1, E2') de bas niveau du deuxième modèle (M2).

10. Procédé selon la revendication 9, dans lequel les éléments de fourniture de données sont fournis dans les niveaux (L0, L1, L2) les plus bas des modèles et tous les éléments (E0, E1, E2) dans le jeu d'éléments (LL) de bas niveau du premier modèle (M1) qui sont mappés sont mappés par ordre croissant à un élément (E0', E1', E2') à un niveau (L0', L1', L2') correspondant dans le deuxième modèle (M2).

11. Procédé selon la revendication 9 ou 10, dans lequel le jeu d'éléments (HL) de haut niveau du premier modèle (M1) inclut un élément (E5) dirigé vers la fourniture d'informations sur la manière dont des fonctions logiques dans un dispositif communiquent avec d'autres entités dans le premier environnement (10) et le jeu d'éléments (E0, E1, E2) de bas niveau du premier modèle (M1) est dirigé vers l'identification d'une collection de fonctions, l'identification de fonctions, des données pour ces fonctions et des attributs desdites données, tandis que le jeu d'éléments (HL) de haut niveau du deuxième modèle (M2) inclut un élément (E3') fournissant une interface logique et le jeu d'éléments (E0', E1', E2') de bas niveau du deuxième modèle (M2) inclut des unités structurelles (E1', E2') de l'interface et des données (E0').

12. Procédé selon la revendication 11, dans lequel les éléments de bas niveau du premier modèle (M1) sont dirigés vers la fourniture de dispositifs logiques, de noeuds logiques de tels dispositifs logiques, d'objets de données de tels noeuds logiques et d'attributs de données de tels objets de données, tandis que les éléments de bas niveau du deuxième modèle sont dirigés vers la fourniture de créneaux, de sous-créneaux au sein de tels créneaux et de canaux, de données d'enregistrement ou de données de diagnostic de tels sous-créneaux.

13. Procédé selon la revendication 11 ou 12, dans lequel une fonctionnalité administrative générique spécifique à un dispositif prévue sur un noeuds logique dans le premier modèle est mappée à un créneau dédié et un ou plusieurs sous-créneaux associés pour agir comme point d'accès de dispositif dans le deuxième modèle.

14. Procédé selon l'une quelconque des revendications 11 à 13, dans lequel le premier modèle est le modèle CEI 61850 et le deuxième modèle est un modèle PROFINET 10.

15. Procédé selon une quelconque revendication précédente, comprenant en outre l'étape consistant à envoyer des données à et/ou recevoir des données depuis un deuxième dispositif moyennant le mappage du premier modèle au deuxième modèle.

16. Dispositif (24) de commande de processus implémentant un premier modèle (M1) hiérarchique de données, lequel est destiné à échanger des données avec au moins un autre dispositif (20) selon un deuxième modèle hiérarchique de données,
dans lequel à la fois le premier et le deuxième modèle (M1, M2) comportent des éléments (E0, E1, E2, E3, E4, E5, E6, E0', E1', E2', E3', E4') de différents types à différents niveaux (L0, L1, L2, L3, L4, L5, L6, L0', L1', L2', L3', L4') et au moins un élément (E6, E5, E4, E4', E3') à un niveau (L6, L5, L4 ; L4', L3') dans un jeu d'éléments (HL) se rapportant à un dispositif et au moins un élément (E0, E0') de fourniture de données à un autre niveau (L0, L0'),
ledit dispositif (24) comprenant :
une unité (26) de gestion d'applications gérant diverses applications du dispositif (24) en relation avec la commande et la communication avec d'autres dispositifs (14, 16, 18, 20, 22), et une unité (36) de gestion de communication de deuxième modèle destinée à assurer une communication avec des dispositifs (20) communiquant selon le deuxième modèle, et étant configurée pour :
mapper ledit élément (E0) de fourniture de données du premier modèle (M1) à un élément (E0') de fourniture de données du deuxième modèle (M2), et
mapper un ou plusieurs éléments (E6, E5) d'identification de dispositif dans le jeu d'éléments (HL) d'identification de dispositif dans le premier modèle (M1) à un ou plusieurs éléments (E4', E3') d'identification de dispositif dans le jeu d'éléments (HL) d'identification de dispositif dans le deuxième modèle (M2), **caractérisé en ce que** le premier modèle (M1) inclut plus d'éléments que le deuxième modèle (M2) et au moins un (E3, E4) n'est pas mappé au deuxième modèle, et dans lequel
l'unité (36) de gestion de communication de deuxième modèle est en outre configurée pour inclure un identifiant d'au moins un élément (E3 ; E1) non mappé disposé à un niveau (L3 ; L1) dans le premier modèle (M1) dans l'élément (E2 ; E0) mappé inférieur le plus proche, et
l'unité (36) de gestion de communication de deuxième modèle comporte une liste de contraintes fonctionnelles pour un élément de fourniture de données du premier modèle et est en outre configurée pour commander le mappage de cet élément en fonction des contraintes fonctionnelles.

17. Dispositif de commande de processus selon la revendication 16, dans lequel chaque niveau (L0', L1', L2', L3', L4') du deuxième modèle (M2) reçoit un mappage d'un élément (E0, E1, E2, E5, E6) depuis le premier modèle (M1).

18. Dispositif de commande de processus selon la revendication 16 ou 17, dans lequel l'unité (36) de gestion de communication de deuxième modèle est en outre configurée pour inclure un identifiant d'au moins un élément (E3 ; E1) non mappé disposé à un niveau (L3 ; L1) dans le premier modèle (M1) dans l'élément (E2 ; E0) mappé inférieur le plus proche.

19. Dispositif de commande de processus selon la revendication 18, dans lequel un élément (E1) d'un type à un niveau (L1) dans le premier modèle (M1) qui est en train d'être mappé peut inclure d'autres éléments du même type et l'unité (36) de gestion de communication de deuxième modèle est configurée pour inclure un identifiant pour ces autres éléments dans l'élément (E0) mappé inférieur le plus proche, tout en maintenant ces autres éléments non mappés.

20. Dispositif de commande de processus selon la revendication 18 ou 19, dans lequel tous les éléments (E3) d'au moins un niveau (L3) dans le premier modèle sont non mappés et l'unité (36) de gestion de communication de deuxième modèle est configurée pour inclure un identifiant pour ces éléments (E3) dans l'élément (E2) mappé inférieur le plus proche.

21. Dispositif de commande de processus selon l'une quelconque des revendications 18 à 20, dans lequel l'identifiant est un nom et l'élément mappé inférieur le plus proche a un nom et l'unité (36) de gestion de communication de deuxième modèle est configurée pour combiner ces noms et nommer l'élément auquel ledit élément inférieur le plus proche est en train d'être mappé avec cette combinaison.

22. Dispositif de commande de processus selon l'une quelconque des revendications 18 à 21, dans lequel un premier élément au niveau le plus bas du premier modèle inclut un deuxième élément au même niveau, et l'unité (36) de gestion de communication de deuxième modèle est configurée pour mapper le deuxième élément sur un élément dans le deuxième modèle, maintenir le premier élément non mappé et inclure un identifiant du premier élément dans le mappage du deuxième élément.

23. Dispositif de commande de processus selon l'une quelconque des revendications 16 à 22, dans lequel l'unité (36) de gestion de communication de deuxième modèle, lors de la commande du mappage d'un élément de fourniture de données, est configurée pour établir un service pour l'objet correspondant dans le deuxième modèle.

24. Dispositif de commande de processus selon la revendication 22 ou 23, dans lequel il existe des éléments de fourniture de données de différents types dans le deuxième modèle et l'unité (36) de gestion de communication de deuxième modèle, lors de la commande du mappage d'un élément de fourniture de données, est configurée pour sélectionner un type d'élément de fourniture de données dans le deuxième modèle auquel l'élément de fourniture de données dans le premier modèle doit être mappé sur la base de la contrainte fonctionnelle.

25. Dispositif de commande de processus selon l'une quelconque des revendications 16 à 24, comprenant en outre au moins une unité (30, 32, 34) de gestion de communication de premier modèle destinée à assurer une communication avec d'autres dispositifs (14, 16, 18, 22) au moyen du premier modèle.

26. Dispositif de commande de processus selon l'une quelconque des revendications 16 à 25, dans lequel le premier modèle est le modèle CEI 61850 et le deuxième modèle est un modèle PROFINET 10.

27. Produit (38) de programme informatique destiné à permettre à un dispositif (24) de commande de processus implémentant un premier modèle (M1) hiérarchique de données d'échanger des données avec au moins un autre dispositif (20) selon un deuxième modèle (M2) hiérarchique de données,
dans lequel à la fois le premier et le deuxième modèle (M1, M2) comportent des éléments (E0, E1, E2, E3, E4, E5, E6, E0', E1', E2', E3', E4') sur différents types à différents niveaux (L0, L1, L2, L3, L4, L5, L6, L0', L1', L2', L3', L4') et au moins un élément (E6, E5, E4, E4', E3') à un niveau (L6, L5, L4 ; L4', L3') dans un jeu d'éléments (HL) se rapportant à un dispositif et au moins un élément (E0, E0') de fourniture de données à un autre niveau (L0, L0'),
comprenant un code de programme informatique pour réaliser le premier dispositif (24), lorsque ledit code est chargé dans ledit dispositif (24) de commande de processus,
mapper ledit élément (E0) de fourniture de données du premier modèle (M1) à un élément (E0') de fourniture de données du deuxième modèle (M2), et
mapper un ou plusieurs éléments (E6, E5) d'identification de dispositif dans le jeu d'éléments (HL) d'identification de dispositif dans le premier modèle (M1) à un ou plusieurs éléments (E4', E3') d'identification de dispositif dans le jeu d'éléments (HL) d'identification de dispositif dans le deuxième modèle (M2), **caractérisé en ce que** le premier modèle (M1) inclut plus d'éléments que le deuxième modèle (M2) et au moins un (E3, E4) n'est pas mappé au deuxième modèle, et
inclure un identifiant d'au moins un élément (E3 ; E1) non mappé disposé à un niveau (L3 ; L1) dans le premier modèle (M1) dans l'élément (E2 ; E0) mappé inférieur le plus proche, et
comprendre une liste de contraintes fonctionnelles pour un élément de fourniture de données du premier modèle et commander l'étape consistant à mapper cet élément en fonction des contraintes fonctionnelles.
